# EUROPÄISCHE PATENTSCHRIFT

(11) **EP 0 465 890 B1**
(45) Veröffentlichungstag und Bekanntmachung des Hinweises auf die Patenterteilung: **23.11.1994**
(21) Anmeldenummer: 91110153.3
(22) Anmeldetag: 20.06.1991
(51) Int. Cl.: F16D 65/853, F16D 55/32, B60T 1/06

(54) **Beölungssystem für eine Bremsscheibe**
Lubricating system for a brake disc
Système de lubrification pour un disque de frein

(30) Priorität: 03.07.1990 DE 4021188
(43) Veröffentlichungstag der Anmeldung: 15.01.1992
(73) Patentinhaber: DEERE & COMPANY, Moline, Illinois 61265 (US)
(72) Erfinder: Al-Deen, Hissam, Dr.-Ing., W-6900 Heidelberg (DE); Hofer, Martin, Dipl.-Ing., W-6800 Mannheim 31 (DE); Gärtner, Jürgen, Dipl.-Ing., W-6520 Worms 16 (DE)
(74) Vertreter: Feldmann, Bernhard

(56) Entgegenhaltungen:
- EP-A- 0 128 758
- GB-A- 2 059 525

## Beschreibung

Die Erfindung betrifft ein Beölungssystem für eine Bremsscheibe, deren Bremsbeläge im wesentlichen radial verlaufende, von innen nach außen von Öl durchströmte Nuten aufweisen, mit wenigstens einem radial außenliegenden Ölsammelkanal, von dem aus das Öl über wenigstens einen Abflußkanal abfließt.

Bei einer nassen Bremse läuft die Bremsscheibe gewöhnlich in dem Öl, das im Bremsgehäuse eingeschlossen ist, so daß die radial innenliegenden Eintrittsöffnungen der Nuten in das Ölbad eintauchen. Infolge der Rotation der Bremsscheibe und der dadurch entstehenden Zentrifugalkräfte wird das Öl durch die Nuten radial nach außen geschleudert. Die Ölströmung in den Nuten des Bremsbelages bestreicht die Reibfläche der Bremse und schmiert und kühlt diese, wobei das Öl erwärmt wird.

Das Öl sammelt sich in einem radial außenliegenden Ölsammelkanal und gelangt von hier aus über Abflußöffnungen wieder zurück in das Bremsgehäuse, wo es sich mit dem übrigen Öl mischt, abkühlt und wieder durch die umlaufenden Nuten angesaugt wird, so daß ein Kühlölkreislauf gebildet ist. Alternativ hierzu kann das Öl von dem Ölkanal aus auch zu einem weiteren Ölsammelbehälter geleitet werden, von dem aus es zu einem Ölkühler abgeführt wird.

Um einen ungehinderten Ölabfluß aus dem Ölsammelkanal zu ermöglichen, haben die sich an den Ölsammelkanal anschließenden Abflußöffnungen einen relativ großen Querschnitt. Beispielsweise kann die Betriebsbremse eines Ackerschleppers für den Ölabfluß aus dem Ölsammelkanal drei auf dem Umfang gleichmäßig verteilte radiale Bohrungen mit Durchmessern von 6 mm aufweisen. Das aus den Nuten der Bremsscheibe austretende Öl entspannt sich im Ölsammelkanal und fließt drucklos über die Abflußkanäle ab.

Es hat sich gezeigt, daß ein derartiges Beölungssystem insbesondere bei hohen Drehzahlen der Bremsscheibe nicht immer eine optimale Schmierung und Kühlung der Bremse gewährleistet. Es besteht die Gefahr, daß während des Bremsvorganges bei hohen Drehzahlen stellenweise trockene Reibung, hohe Temperaturen, Verbrennen des Öles und Zerstören der Reibflächen bzw. des Belages auftreten kann.

Die mit der Erfindung zu lösende Aufgabe wird darin gesehen, ein Beölungssystem anzugeben, das eine zuverlässige Schmierung und Kühlung der Bremsflächen auch bei hohen Drehzahlen gewährleistet und die genannten Gefahren vermeidet.

Die Aufgabe wird erfindungsgemäß durch Drosselung des aus dem Ölsammelkanal austretenden Öles gelöst.

Diese Drosselung des Ölabflusses führt zu einem Rückstau des Öles und damit einer Druckerhöhung in dem Ölsammelkanal und teilweise auch in den Nuten der Bremsscheibe. Es wird somit nicht der bisher verfolgte und an sich naheliegende Weg beschritten, einen ungehinderten Abfluß des Öles von dem Sammelkanal zum Sumpf zu ermöglichen.

Aus der EP-A1 0 128 758 ist eine flüssigkeitsgekühlte Fahrzeugbremsscheibe bekannt geworden, die durch eine Ringnut in zwei konzentrische kreisförmige Bremsbelagsbereiche unterteilt ist. Die Ringnut dient als Kühlflüssigkeitsreservoir und soll eine ausreichende Kühlmittelversorgung der Bremsbelagsbereiche sicherstellen. Drosselungsmittel begrenzen den Kühlmittelabfluß aus der Ringnut. Als Drosselungsmittel dienen die Eigenporösität des Bremsbelagmaterials oder im wesentlichen radiale Nuten in dem äußeren Bremsbelagsbereich. Diese Maßnahmen gewährleisten insbesondere bei hohen Drehzahlen nicht immer einen zuverlässigen Wärmeabtransport von den Bremsscheiben zu einem Kühlmittelvorratsbehälter.

Die Erkenntnisse, die aus der erfindungsgemäßen Lösung resultierten, gehen davon aus, daß eine ausreichende luftfreie Ölversorgung einer im wesentlichen senkrecht ausgerichteten Bremsscheibe, deren unterer Bereich in einem Ölsumpf läuft, gewährleistet sein muß. Die radial innenliegenden Eintrittsöffnungen der Bremsscheibe tauchen bei jeder Umdrehung in das Ölbad ein und füllen sich mit Öl.

Die luftfreie Ölversorgung der umlaufenden Nuten außerhalb des Ölsumpfes ist bei gegebener Konstruktion, Ölstand und Öltemperatur (Zähigkeit) bis zu einer gewissen kritischen Drehzahl der Bremsscheibe durch die Ölmenge gegeben, die durch die Schleuderwirkung der Scheibe an beiden Seiten der Bremsscheibe von innen nach außen fließt.

Bei Überschreiten der kritischen Drehzahl wird jedoch die Ölströmung in den Nuten so schnell, daß eine größere Ölmenge abgeführt wird als nachströmen kann. Die Strömung reißt an den Nuteingängen ab, und Luft oder ein Luftölgemisch wird angesaugt. Außerdem wird durch die hohe Rotation der Bremsscheibe das Öl in deren Nähe stark mit Luft zerschlagen. Die Luftbeimischung wird dann noch verstärkt, wenn die Bremsscheibe Durchbrechungen aufweist, durch die das Öl zum Ausgleich des beidseits der Bremsscheibe herrschenden Ölstandes treten kann.

Die angesaugte bzw. mit dem Öl als Schaum mitgelieferte Luftmenge kann so groß sein, daß während des Bremsvorganges stellenweise trockene Reibung, hohe Temperaturen, Verbrennen des Öles und Zerstören der Reibflächen bzw. des Belages auftritt.

Die erfindungsgemäße Lösung schafft hier wesentlich verbesserte Beölungsbedingungen für die Bremsscheibe. Durch den Rückstau des Öles fließt dieses nicht so schnell aus den Nuten ab. Die Drosselwirkung nimmt mit der pro Zeiteinheit durchtretenden Ölmenge, also mit einem Ansteigen der Drehzahl der Bremsscheibe, zu. Die Drosselung wird so bemessen, daß über der genannten kritischen Drehzahl eine ausgeprägte Drosselwirkung einsetzt, die auf die Ölströmung durch die Nuten hemmend wirkt und damit ein Abreißen der Ölströmung verhindert, d. h., die Ölgeschwindigkeit wird nicht so groß, daß Luft durch die Kanäle in der Bremsscheibe angesaugt wird. Der Lufteintritt und die damit verbundenen Probleme können hierdurch vermieden oder entscheidend reduziert werden.

Unter der kritischen Drehzahl der Bremsscheibe verändern sich die Beölungsbedingungen im Vergleich mit einem konventionellen Beölungssystem nur unwesentlich, da bei tieferen Drehzahlen und geringeren Strömungsgeschwindigkeiten des Öles die Ölliefermenge der Bremsscheibe so gering ist, daß die Drosselung im Abflußkanal kaum wirksam ist.

Vorzugsweise ist die Drosselung des Abflußkanales so bemessen, daß sich ein Überdruck im Ölsammelkanal einstellt. Ein geeigneter Überdruck läßt sich für eine konkrete Bremse anhand von Versuchen ermitteln. Es hat sich bei etwa maximalen Betriebsdrehzahlen der Bremsscheibe und betriebswarmer Bremse, was einer Öltemperatur von 70° entsprechen kann, ein Überdruck von 0,2 bis 1,0 bar bewährt.

Ein bevorzugter Überdruckbereich bei den genannten Betriebsbedingungen liegt zwischen 0,3 und 0,6 bar. Als besonders günstig hat sich ein Wert um 0,4 bar herausgestellt.

Gemäß einer bevorzugten Ausgestaltung der Erfindung verbindet der gedrosselte Abflußkanal den Ölsammelkanal mit einem außerhalb des Bremsgehäuses liegenden Ölsumpf. Das durch den Bremsvorgang erwärmte Öl fließt somit über den Ölsammelkanal und den gedrosselten Abflußkanal zum Ölvorratsbehälter ab, von wo es über einen Ölkühler wieder ins Bremsgehäuse gepumpt werden kann. Dies ermöglicht eine optimale Kühlung des Schmieröles.

Gemäß einer weiteren bevorzugten Ausgestaltung der Erfindung verbindet der gedrosselte Abflußkanal den Ölsammelkanal mit einer Ölkammer im Bremsgehäuse, d. h. mit dem Sumpf, durch den sich die Bremsscheibe dreht. Im Sumpf vermischt sich das aus dem Ölsammelkanal austretende erwärmte Öl mit dem übrigen Öl. Ein Ölaustausch mit einem außerhalb des Bremsgehäuses liegenden Ölsumpf kann über einen Überlauf im Bremsgehäuse und eine Speiseleitung vom Ölsumpf zum Bremsgehäuse erfolgen.

Zweckmäßigerweise ist lediglich ein einziger gedrosselter Abflußkanal vorgesehen. Dieser zweigt vorzugsweise im oberen Bereich des Ölsammelkanales von diesem ab. Der Abflußkanal liegt damit im Bereich senkrecht über der Drehachse der Bremsscheibe. Hierdurch kann es vermieden werden, daß sich im Bereich der Eintrittsöffnung des Abflußkanales Schmutz sammelt, der zu einem Verstopfen des Abflußkanales führen könnte.

Bei einer Rückführung des Schmieröles in das Bremsgehäuse verläuft der Abflußkanal vorzugsweise durch den Bremsdruckring. Es kann sich hierbei um eine radial verlaufende Zylinderbohrung handeln, die einen Durchmesser von ca. 4 mm und eine Länge von ca. 50 mm hat.

Weitere vorteilhafte Ausgestaltungen und Weiterbildungen der Erfindung gehen aus den Unteransprüchen hervor.

Anhand der Zeichnung, die zwei Ausführungsbeispiele der Erfindung zeigt, sollen die Erfindung sowie weitere Vorteile und vorteilhafte Weiterbildungen und Ausgestaltungen der Erfindung näher beschrieben und erläutert werden.

Es zeigt:
- Fig. 1: den Längsschnitt einer Fahrzeugbetriebsbremse mit einem erfindungsgemäßen Beölungssystem,
- Fig. 2: den Längsschnitt einer Fahrzeugbetriebsbremse mit einem weiteren erfindungsgemäßen Beölungssystem und
- Fig. 3: den Querschnitt längs der Linie III - III in Fig. 1 mit einer Aufsicht der Bremsscheibe.

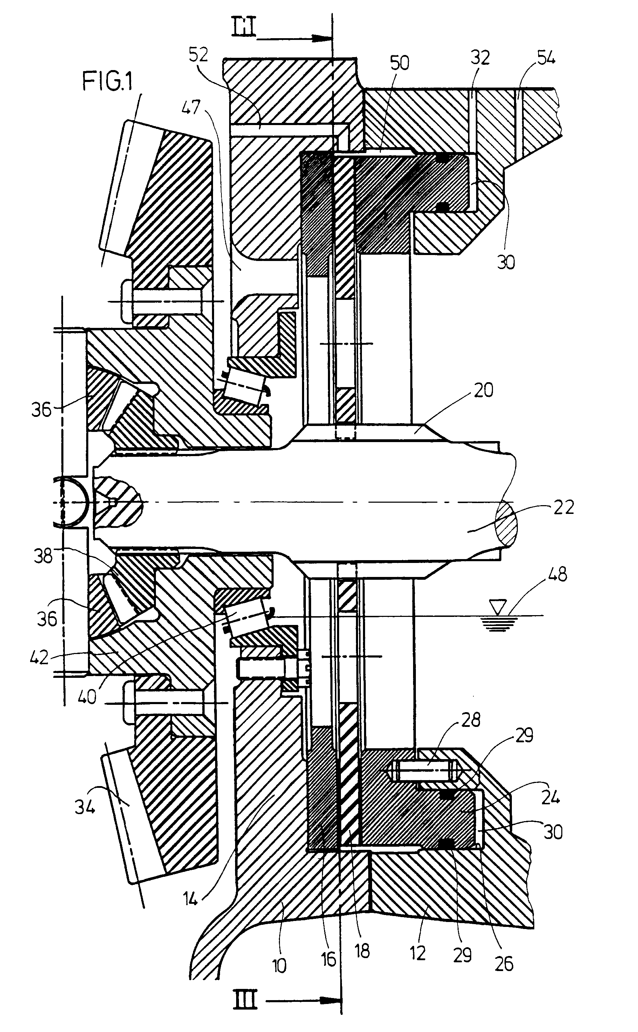

In Fig. 1 ist ein Teil eines Getriebegehäuses 10 und eines Bremsgehäuses 12 dargestellt. Beide Gehäuse sollen im folgenden, sofern nichts anderes gesagt ist, gemeinsam als Bremsgehäuse 12 bezeichnet werden, da sie den Innenraum für eine Betriebsbremse einschließen.

An einer Zwischenwand 14, die ein Differentialgetriebe von der Betriebsbremse trennt, liegt die Anlaufscheibe 16 der Betriebsbremse an, die als feststehender Bremsring ausgebildet ist. An die Anlaufscheibe 16 schließt sich axial die Bremsscheibe 18 an, die über eine Keilverzahnung mit einer in etwa horizontal ausgerichteten Endantriebswelle 22 kraftschlüssig verbunden ist und sich mit der Endantriebswelle 22 mitdreht. Auf der der Anlaufscheibe 16 axial gegenüberliegenden Seite der Bremsscheibe 18 ist ein ringförmig ausgebildeter Bremskolben 24 angeordnet. Der Bremskolben 24 ist in einer in das Bremsgehäuse 12 eingelassenen axial ausgerichteten Ringnut 26 geführt und gegen Verdrehung durch einen oder mehrere Stifte 28 gesichert.

Der Bremskolben 24 schließt mit der Wandung der Ringnut 26 einen durch Dichtungen 29 abgeschlossenen Druckraum 30 ein, welcher über einen Kanal 32 und eine nicht dargestellte Bremsleitung mit einem nicht dargestellten Bremszylinder in Verbindung steht. Wird das Bremspedal betätigt, so füllt der Bremszylinder den Druckraum 30 mit Bremsöl und setzt diesen unter Druck. Hierdurch wird der Bremskolben 24 gegen die Bremsscheibe 18 gedrückt und die Bremsscheibe 18 wird zwischen Bremskolben 24 und Anlaufscheibe 16 derart eingespannt, daß die Bremsbeläge der Bremsscheibe 18 gegen die entsprechenden Bremsflächen des Bremskolbens 24 und der Anlaufscheibe 16 gepreßt werden, was zu einer Abbremsung der Endantriebswelle 22 führt.

Auf der anderen Seite der Zwischenwand 14 befindet sich ein Differentialgetriebe, bestehend aus Tellerrad 34, Kegelritzeln 36, 38 und einem über ein Kegelrollenlager 40 an der Zwischenwand 14 gelagerten Differentialgetriebegehäuse 42. Das Kegelritzel 38 ist über eine Keilverzahnung kraftschlüssig mit der Endantriebswelle 22 verbunden und treibt diese an. In der Zwischenwand 14 ist oberhalb der Endantriebswelle ein Durchbruch 47 vorgesehen, durch den ein Ölstandsausgleich zwischen Bremsgehäuse 12 und Getriebegehäuse 10 möglich ist.

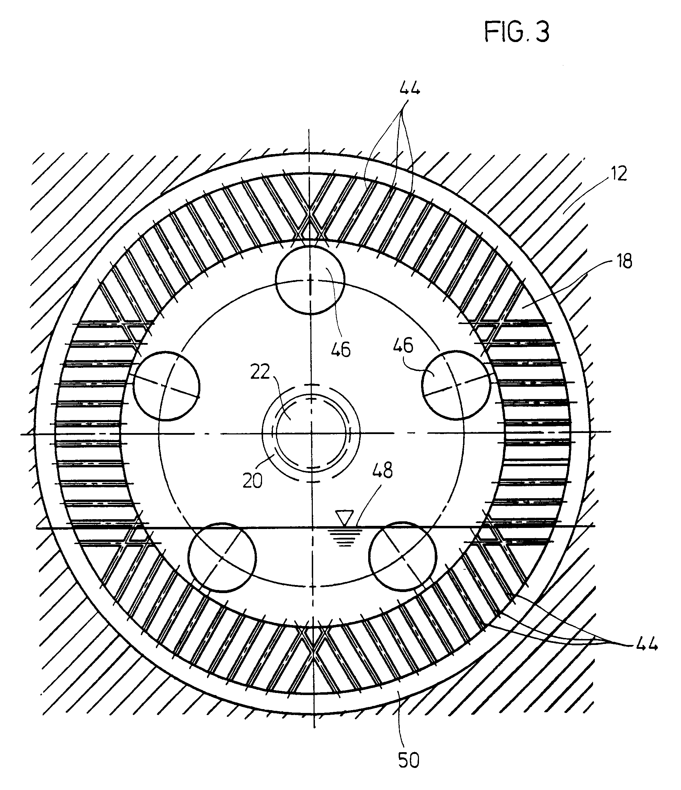

Die Bremsscheibe 18 weist beidseits einen äußeren ringförmigen Bereich auf, der mit einem Bremsbelag, beispielsweise einer Papierbeschichtung, versehen ist. Wie aus Fig. 3 hervorgeht, sind in den Bremsbelag eine Vielzahl von auf den Umfang verteilten, in etwa radial verlaufenden Nuten 44 eingelassen. Ferner enthält die Bremsscheibe in einem Bereich, der axial innerhalb der Bremsbeläge liegt, Durchgangsbohrungen 46, durch die ein Ausgleich des Ölspiegels 48 beidseits der Bremsscheibe 18 möglich ist.

Radial außerhalb der Bremsscheibe 18 und eines sich an diese anschließenden Bereiches des Bremskolbens 24 befindet sich in dem Bremsgehäuse 12 ein Ölsammelkanal 50. Der Ölsammelkanal 50 ist über einen Abflußkanal 52 mit dem Inneren des Getriebegehäuses 10 verbunden, so daß Öl aus dem Ölsammelkanal 50 über den Abflußkanal 52 in das Getriebegehäuse 10 abfließen kann.

Findet beispielsweise für einen landwirtschaftlichen Schlepper eine Bremsscheibe 18 mit einem Durchmesser von ca. 30 cm Verwendung, die auf eine Bremsverzögerung von ca. 45 % der Erdbeschleunigung bei einem Fahrzeuggewicht von ca. 7,5 t und einer maximalen Drehzahl von ca. 1000 U/min ausgelegt ist, so kann als Abflußkanal eine Bohrung von 4 mm Durchmesser mit einer Länge von ca. 50 mm dienen.

Wird die Endantriebswelle abgebremst, so fließt infolge der Zentrifugalkraft Öl aus dem Ölbad 48 im Bremsgehäuse 12 durch die Nuten 44 in der Bremsscheibe 18 radial nach außen in den Ölsammelkanal 50 und weiter durch den Abflußkanal 52 in das Getriebegehäuse 10. Das aus dem Bremsgehäuse 12 abfließende Öl kann dabei durch einen Zufluß 54 wieder ersetzt werden.

Bei geringen Drehzahlen der Bremsscheibe 18 ist die Fördermenge des Öles durch die Nuten 44 so gering, daß sich kein wesentlicher Druck im Ölsammelkanal 50 infolge der Drosselwirkung des Abflußkanales 52 aufbaut, d. h. das Öl fließt ungehindert in das Getriebegehäuse 10 ab.

Bei hohen Drehzahlen der Bremsscheibe 18 hingegen wird infolge der Fliehkräfte eine wesentlich größere Ölmenge durch die Nuten 44 gefördert. Diese große Ölmenge kann jedoch nicht ungehindert durch den Abflußkanal 52 abfließen, da dessen Querschnitt nicht auf den Durchtritt großer Ölmengen ausgelegt ist. Folglich staut sich das Öl im Ringraum 50 und führt hier zu einem Druckanstieg. Bei einer Abbremsung von einer Drehzahl der Endantriebswelle von ca. 1000 U/min aus, kann sich beispielsweise im Ölsammelkanal ein Überdruck von 0,4 bar einstellen. Dieser Überdruck behindert den freien Ölaustritt aus den Nuten 44.

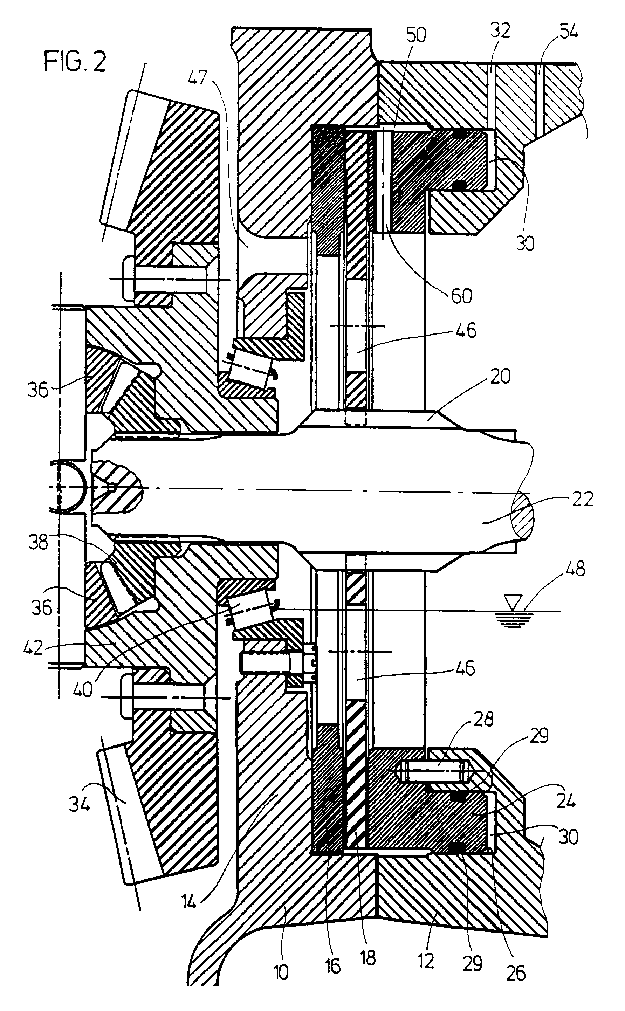

Die Betriebsbremse gemäß Fig. 2 unterscheidet sich von der in Fig. 1 dargestellten lediglich durch die Lage des Abflußkanales. Hier ist der Abflußkanal 60 als radiale Bohrung im Bremskolben 24 ausgebildet und verbindet den Ölsammelkanal 50 mit dem Inneren des Bremsgehäuses 12. Auch hier kann der Abflußkanal als Bohrung mit einem Durchmesser von 4 mm ausgebildet sein.

Auch wenn die Erfindung lediglich an Hand zweier Ausführungsbeispiele beschrieben wurde, erschließen sich für den Fachmann im Lichte der vorstehenden Beschreibung viele verschiedenartige Alternativen, Modifikationen und Varianten, die unter die vorliegende Erfindung fallen.

## Patentansprüche

1. Beölungssystem für eine Bremsscheibe (18), deren Bremsbeläge im wesentlichen radial verlaufende, von innen nach außen von Öl durchströmte Nuten (44) aufweisen, mit wenigstens einem radial außenliegenden Ölsammelkanal (50), von dem aus das Öl über wenigstens einen Abflußkanal (52, 60) abfließt, dadurch gekennzeichnet, daß der Abflußkanal (52, 60) gedrosselt ist.

2. Beölungssystem nach Anspruch 1, dadurch gekennzeichnet, daß die Drosselung des Abflußkanales (52, 60) so bemessen ist, daß sich ein Überdruck im Ölsammelkanal (50) einstellt.

3. Beölungssystem nach Anspruch 2, dadurch gekennzeichnet, daß bei etwa maximalen Betriebsdrehzahlen der Bremsscheibe (18) und einer Öltemperatur, die der Betriebstemperatur entspricht, sich ein Überdruck von 0,2 bis 1,0 bar einstellt.

4. Beölungssystem nach Anspruch 3, dadurch gekennzeichnet, daß der Überdruck einen Wert zwischen 0,3 und 0,6 bar einnimmt.

5. Beölungssystem nach einem der Ansprüche 1 bis 4, dadurch gekennzeichnet, daß der Abflußkanal (52) den Ölsammelkanal (50) mit einem außerhalb des Bremsgehäuses (12) liegenden Ölsumpf verbindet.

6. Beölungssystem nach einem der Ansprüche 1 bis 5, dadurch gekennzeichnet, daß der Abflußkanal (60) den Ölsammelkanal (50) mit einer Ölkammer im Bremsgehäuse (12) verbindet.

7. Beölungssystem nach Anspruch 5 oder 6, dadurch gekennzeichnet, daß lediglich ein Abflußkanal (52, 60) vorgesehen ist, der im oberen Bereich des Ölsammelkanales (50) von diesem abzweigt.

8. Beölungssystem nach Anspruch 6 oder 7, dadurch gekennzeichnet, daß der Abflußkanal (60) als in etwa radial durch den Bremskolben (24) verlaufende Zylinderbohrung ausgebildet ist.

9. Beölungssystem nach einem der Ansprüche 1 bis 8, dadurch gekennzeichnet, daß der Ölsammelkanal (50) als Ringkanal ausgebildet ist, der radial außerhalb der Bremsscheibe (18) im Bremsgehäuse (12) ausgebildet ist.

10. Beölungssystem nach einem der Ansprüche 1 bis 9, dadurch gekennzeichnet, daß der Ölsammelkanal (50) sich axial bis in den Bereich eines auf die Bremsscheibe (18) einwirkenden Bremskolbens (24) erstreckt.

## Claims

1. A lubricating system for a brake disc (18), whose brake linings comprise substantially radially extending grooves (44) through which oil flows from the inside to the outside, with at least one radially outer oil collection channel (50), from which the oil flows away through at least one drain channel (52, 60), characterized in that the drain channel (52, 60) is throttled.

2. A lubricating system according to claim 1, characterized in that the throttling of the drain channel (52, 60) is such that an excess pressure is established in the oil collecting channel (50).

3. A lubricating system according to claim 2, characterized in that an excess pressure of 0.2 to 1.0 bar is established at approximately maximum speed of operation of the brake disc (18) and an oil temperature which corresponds to the operating temperature.

4. A lubricating system according to claim 3, characterized in that the excess pressure has a value between 0.3 and 0.6 bar.

5. A lubricating system according to any of claims 1 to 4, characterized in that the drain channel (52) connects the oil collection channel (50) to an oil sump lying outside the brake housing (12).

6. A lubricating system according to any of claims 1 to 5, characterized in that the drain channel (60) connects the oil collecting channel (50) to an oil chamber in the brake housing (12).

7. A lubricating system according to claim 5 or 6, characterized in that there is only one drain channel (52, 60), which branches off the oil collecting channel (50) in the upper region thereof.

8. A lubricating system according to claim 6 or 7, characterized in that the drain channel (60) is formed as a cylindrical bore running approximately radially through the brake piston (24).

9. A lubricating system according to any of claims 1 to 8, characterized in that the oil collecting channel (50) is formed as an annular channel, which is formed in the brake housing (12) radially outside the brake disc (18).

10. A lubricating system according to any of claims 1 to 9, characterized in that the oil collecting channel (50) extends axially into the region of a brake piston (24) acting on the brake disc (18).

## Revendications

1. Système de lubrification pour un disque de frein (18), dont les garnitures de frein présentent des rainures (44) s'étendant essentiellement radialement et dans lesquelles l'huile s'écoule de l'intérieur vers l'extérieur, avec au moins un canal collecteur d'huile (50) situé radialement à l'extérieur et à partir duquel l'huile s'évacue par au moins un canal d'évacuation (52, 60), **caractérisé** en ce que le canal d'évacuation (52, 60) est étranglé.

2. Système de lubrification selon la revendication 1, **caractérisé** en ce que l'étranglement du canal d'évacuation (52, 60) est dimensionné de telle sorte qu'une surpression s'établit dans le canal collecteur d'huile (50).

3. Système de lubrification selon la revendication 2, **caractérisé** en ce qu'à des vitesses de rotation approximativement maximales du disque de frein et une température de l'huile correspondant à la température de service, il s'établit une surpression de 0,2 à 1,0 bar.

4. Système de lubrification selon la revendication 3, **caractérisé** en ce que la surpression prend une valeur comprise entre 0,3 et 0,6 bar.

5. Système de lubrification selon l'une quelconque des revendications 1 à 4, **caractérisé** en ce que le canal d'évacuation (52) relie le canal collecteur d'huile (50) à un carter d'huile situé en dehors du carter de frein (12).

6. Système de lubrification selon l'une quelconque des revendications 1 à 5, **caractérisé** en ce que le canal d'évacuation (60) relie le canal collecteur d'huile (50) à une chambre d'huile dans le carter de frein (12).

7. Système de lubrification selon la revendication 5 ou 6, **caractérisé** en ce qu'il est prévu un seul canal d'évacuation (52, 60), qui bifurque du canal collecteur d'huile (50) dans la région supérieure de ce dernier.

8. Système de lubrification selon la revendication 6 ou 7, **caractérisé** en ce que le canal d'évacuation (60) est réalisé sous la forme d'un perçage cylindrique traversant approximativement radialement le piston de frein (24).

9. Système de lubrification selon l'une quelconque des revendications 1 à 8, **caractérisé** en ce que le canal collecteur d'huile (50) est réalisé sous la forme d'un canal annulaire, qui est configuré dans le carter de frein (12) radialement à l'extérieur du disque de frein (18).

10. Système de lubrification selon l'une quelconque des revendications 1 à 9, **caractérisé** en ce que le canal collecteur d'huile (50) s'étend axialement jusque dans la région d'un piston de frein (24) agissant sur le disque de frein (18).
